# EUROPEAN PATENT APPLICATION

(11) **EP 3 021 592 A1**
(43) Date of publication of application: **18.05.2016**
(21) Application number: 15184388.5
(22) Date of filing: 09.09.2015
(51) Int. Cl.: H04N 21/41, H04N 21/436

(54) **IMAGE INPUT APPARATUS, DISPLAY APPARATUS AND OPERATION METHOD OF THE IMAGE INPUT APPARATUS**

(30) Priority: 11.11.2014 KR 20140156243
(71) Applicant: Samsung Electronics Co., Ltd., Gyeonggi-do 16677 (KR)
(72) Inventor: KIM, Dong-min, Gyeonggi-do (KR); KIM, Sang-won, Seoul (KR); CHOI, Shin-woo, Gyeonggi-do (KR); CHOI, Jung-hwa, Gyeonggi-do (KR)
(74) Representative: Appleyard Lees IP LLP

(57) **Abstract**

An image input apparatus includes a receiver configured to receive an input source including at least one of an image source and an audio source from an external device, a communicator configured to enable wireless communication with a display apparatus, and a data processor, being connected with the communication unit, for obtaining an input signal based on the input source, and transmitting the input signal to the display apparatus.

## Description

### BACKGROUND

### 1. Field

Apparatuses and methods consistent with exemplary embodiments relate to an image input apparatus, a display apparatus and an operation method of the image input apparatus, and more particularly, to an image input apparatus and a display apparatus which may communicate each other more efficiently.

### 2. Description of the Related Art

Display apparatuses are one of the most widely used electronic apparatuses today. As the technology has improved, more external apparatuses that provide an image source and an audio source have become available. Some examples of external apparatuses providing an image source and an audio source are: a Blu-ray disc (BD) player, a digital video disc (DVD) player, smart apparatuses including a smart phone and a tablet personal computer (PC), a computer, and a set top box, etc. In addition, a broadcasting station, a server connected through a network, etc. may provide the image source and the audio source to the display apparatus. For example, a television (TV) apparatus used to perform only uni-directional receiving of broadcasting signals transmitted from a broadcasting station and displaying of broadcasting images. However, the TV apparatus nowadays may receive inputs of not only broadcasting images transmitted from a broadcasting station but also an image source and an audio source inputted from various external devices, and generate outputs on the display.

Thus, the display apparatus receives the image source and the audio source from various external devices and outputs the same thereon.

### SUMMARY

One or more exemplary embodiments include an image input apparatus and a display apparatus which may effectively communicate each other.

Additional aspects will be set forth in part in the description which follows and, in part, will be apparent from the description, or may be learned by practice of exemplary embodiments.

According to an aspect of an exemplary embodiment, there is provided an image input apparatus including a receiver configured to receive, from an external device, an input source including at least one of an image source and an audio source; a communicator configured to communicate wirelessly with a display apparatus; and a data processor configured to obtain an input signal based on the input source and transmit the input signal to the display apparatus through the communicator.

The data processor may be further configured to obtain a plurality of channel signals, and wherein the communicator may include a plurality of antennas, each of which transmits a corresponding channel signal from among the plurality of channel signals.

A first channel signal from among the plurality of channel signals may include a video signal, and a second channel signal from among the plurality of channel signals may include a graphic signal.

A third channel signal from among the plurality of channel signals may include a data signal, and the data signal may include at least one of control information for controlling the display apparatus and image processing information for signal processing of the display apparatus.

At least one of the first channel signal and the second channel signal may further include an audio signal.

The data processor may be further configured to transmit each of the plurality of channel signals along with a plurality of sync signals that are identical to each other.

The plurality of channel signals may be transmitted simultaneously.

A first channel signal from among the plurality of channel signals may include a video signal, and a second channel signal from among the plurality of channel signals may include a graphic signal.

At least one antenna from among the plurality of antennas may be a transceiving antenna.

The transceiving antenna may be configured to receive a control signal transmitted from the display apparatus, and the data processor may be further configured to obtain the graphic signal based on the control signal.

According to an aspect of another exemplary embodiment, there is provided an image display apparatus including a communicator configured to communicate wirelessly with the image input apparatus, a data processor that is connected to the communicator and configured to receive an input signal transmitted from the image input and obtain an output image based on the input signal, and an outputter configured to display the output image.

The data processor may be further configured to receive a plurality of channel signals; each channel signal being received through a different channel.

The data processor may be further configured to obtain a video signal included in a first channel signal from among the plurality of channel signals, a graphic signal r included in a second channel signal from among the plurality of channel signals, and the output image based on the video signal and the graphic signal.

The data processor may be further configured to obtain a video image based on the video signal, a graphic object based on the graphic signal, and the output image including the video image and the graphic object.

The data processor may be further configured to obtain the video image by performing, on the video signal, an image processing method including at least one of scaling, a frame rate control, and a motion judder canceller.

The third channel signal from among the plurality of channel signals may include the data signal, and the data processor is further configured to perform the image processing method based on the data signal.

The processor may be further configured to receive each of the plurality of channel signals along with the sync signals, and adjust a timing of the plurality of channel signals.

According to an aspect of another exemplary embodiment, there is provided an operation method of the image input apparatus that may include receiving the input source including at least one of the image source and the audio source from an external device, obtaining the input signal based on the input source, and transmitting the input signal to the display apparatus wirelessly.

The input signal may include the plurality of channel signals, and the first channel signal from among the plurality of channel signals may include a video signal, and the second channel signal, that is, another of the plurality of channel signals may include a graphic signal.

A non-transitory computer-readable recording medium for storing a program including instructions, which, when executed by a computer, may perform the operation method.

According to an aspect of another exemplary embodiment, there is provided a method of displaying an image, the method including receiving at least one input signal from an image input apparatus through at least one channel signal, wherein the input signal includes at least one of a video signal, a graphic signal, and an audio signal; performing signal processing on the at least one input signal by independently performing a processing method on each of the at least one input signal; outputting the processed at least one input signal on a display screen of a display apparatus.

The processing method may include at least one of a scaling, a frame rate control (FRC) and a motion judder canceller (MJC) to the input signal.

The at least one of the at least one channel signal may provide bidirectional control between the image input apparatus and the display apparatus.

The processing method performed on a first input signal may be different than the processing method performed on a second input signal.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 illustrates a configuration of a display system according to an exemplary embodiment;
FIG. 2 is a flow chart illustrating an operation method of a display system in FIG. 1 according to an exemplary embodiment;
FIG. 3 illustrates the display system in FIGS. 1 and 2 according to an exemplary embodiment;
FIG. 4 illustrates a configuration of a display system according to an exemplary embodiment;
FIG. 5 illustrates an example of the display system in FIG. 4 according to an exemplary embodiment;
FIG. 6 illustrates an example of an image obtained by an exemplary display apparatus of FIG. 5 according to an exemplary embodiment;
FIG. 7 illustrates an example of an output image displayed by an exemplary display apparatus of FIG. 5 according to an exemplary embodiment;
FIG. 8 illustrates an example of an output image displayed by a display apparatus according to an exemplary embodiment;
FIG. 9 illustrates an example of a frame rate control (FRC) according to an exemplary embodiment;
FIG. 10 illustrates an example of a motion judder canceller (MJC) according to an exemplary embodiment;
FIGS. 11 through 13 illustrate examples of an exemplary display system of FIG. 4 according to one or more exemplary embodiments;
FIG. 14 illustrates a configuration of a display system according to an exemplary embodiment;
FIG. 15 illustrates an example of an exemplary display system of FIG. 14 according to an exemplary embodiment;
FIG. 16 illustrates a configuration of an image input apparatus according to an exemplary embodiment;
Fig. 17 illustrates another configuration of an exemplary image input apparatus of FIG. 16 according to an exemplary embodiment;
FIG. 18 illustrates a configuration of a display apparatus according to an exemplary embodiment; and
FIG. 19 illustrates another configuration of an exemplary display apparatus of FIG. 18 according to an exemplary embodiment.

### DETAILED DESCRIPTION

Reference will now be made in detail to one or more exemplary embodiments, examples of which are illustrated in the accompanying drawings, wherein like reference numerals refer to like elements throughout. The exemplary embodiments may have different forms and should not be construed as being limited to the descriptions set forth herein. Accordingly, the exemplary embodiments are merely described below, by referring to the figures, to describe and illustrate aspects of the inventive concepts. As used herein, the term "and/or" includes any and all combinations of one or more of the associated listed items. Expressions such as "at least one of," when preceding a list of elements, modify the entire list of elements and do not modify the individual elements of the list.

In the present disclosure, an "image input apparatus" may be connected with various external devices either by wire or wirelessly, and may be referred to as any electronic apparatus or computing apparatus which may transmit to a display apparatus an input source including at least one of an image source and an audio source received from external devices.

Terms used herein are mostly common terms that are generally used in consideration of functions in the present disclosure; however, terms may vary depending on the intentions of persons having ordinary skill in the art, precedents, or discovery of new technologies, etc. In addition, the applicant may select terms in particular examples in which detailed meanings will be described in the relevant portions of the present disclosure.

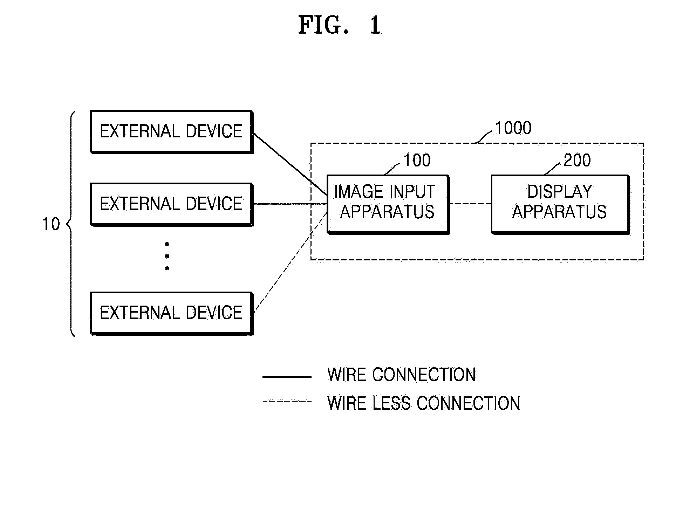

FIG. 1 illustrates a configuration of a display system 1000 according to an exemplary embodiment.

Referring to FIG. 1, the display system 1000 may include an image input apparatus 100 and a display apparatus 200.

The image input apparatus 100 may be connected, either by wire or wirelessly, with various external devices 10 providing an input source, including at least one of an image source and an audio source. Examples of various external devices 10 may be a BD player, a DVD player, smart devices including a smart phone and a tablet PC, a computer and a set top box, etc. As another example, a storage medium (e.g., memory) storing the input source may be the external device 10 that provides the input source to the image input apparatus 100. As yet other examples, a broadcasting station, a server connected through a network, etc., may be the external devices 10 that provide the input source to the image input apparatus 100.

The image input apparatus 100 may include a connecting unit (e.g., connector) configured to connect with various external devices 10. Depending on the types of external devices 10, methods to be connected with the image input apparatus 100 may vary. Accordingly, the image input apparatus 100 may include various types of connecting ports. Various connecting ports included in the image input apparatus 100 may be at least one of a high definition multimedia interface (HDMI) port, a universal serial bus (USB) port, a local area network (LAN) port, etc. In addition, the connecting unit may include a short-distance communication module, a wire communication module, a wireless communication module, etc., which may be connected with external devices 10.

The image input apparatus 100, may be provided with the input source from one or more external devices 10, including at least one of the image source and the audio source, and transmit the input source provided to the display apparatus 200 wirelessly.

The display apparatus 200 may display an output image based on the input source received wirelessly from the image input apparatus 100. The display apparatus 200 may be realized as at least one of a liquid crystal display (LCD), a cathode ray tube (CRT) display, a plasma display panel (PDP) display, an organic light emitting diode (OLED) display, a field emission display (FED), a light emitting diode (LED) display, a vacuum fluorescence display (VFD), a digital light processing (DLP) display, a flat panel display (FPD), a 3D display and a transparent display.

The image input apparatus 100 may communicate with the display apparatus 200 through various wireless communication methods. For example, the methods may include at least one of multimedia wireless transmission technology including a wireless gigabit alliance (Wi-Gig) and a wireless high definition (Wi-HD); however, it is not limited thereto.

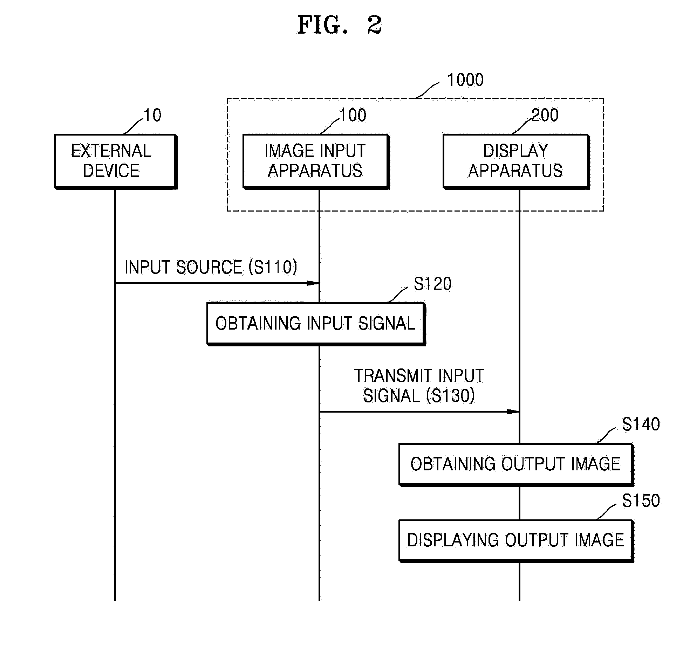

FIG. 2 is a flow chart illustrating an operation method of a display system 1000 of FIG. 1 according to an exemplary embodiment.

Referring to FIGS. 1 and 2, the image input apparatus 100 may be provided with the input source including at least one of the image source and the audio source from one or more external devices 10 (S110). The image source may be video data which may be displayed as a video image. The audio source may be audio data which may be outputted as sound.

The image input apparatus 100 may obtain an input signal based on the input source (S120). The input signal may include a video signal and an audio signal. In addition, the input signal may further include a graphic signal and a data signal.

The image input apparatus 100 may obtain the video signal and the audio signal based on the input source. The image input apparatus 100 may obtain the video signal based on the video data, e.g., the image source included in the input source. The image input apparatus 100 may obtain the audio signal based on the audio data, e.g., the audio source included in the input source. The image input apparatus 100 may obtain the video signal through data processing of the video data, and may obtain the audio signal through data processing of the audio data. Examples of data processing may be compression, formatting, encoding, modulation, etc.; however, exemplary embodiments are not limited to these methods. The video signal may include a plurality of frames. Each frame may indicate two-dimensional data including pixel values for respective pixels which are discrete image factors. Pixel values may be information related to brightness and/or color.

In addition, the image input apparatus 100 may obtain the graphic signal. The graphic signal may be a signal to display a graphic object. The graphic object may indicate various information which may be displayed as either a graphic or a text on a screen. For example, the graphic object may include an on screen display (OSD) menu, program information, an application icon, an application window, a user interface (UI) window, a subtitle corresponding to the video signal, etc.; however, exemplary embodiments are not limited to these.

The image input apparatus 100 may store information for displaying the graphic object. The image input apparatus 100 may obtain the graphic signal based on a user's input or a control of the display apparatus 200, or autonomously.

In addition, the image input apparatus 100 may obtain the data signal. The data signal may include at least one of control information for controlling the display apparatus 200 and signal processing information for signal processing, including image processing and data processing of the display apparatus 200.

The image input apparatus 100 may be connected with the display apparatus 200 wirelessly, and may transmit the input signal to the display apparatus 200 (S130). The display apparatus 200 may receive the input signal.

The display apparatus 200 may obtain the output image based on the input signal received (S140). The display apparatus 200 may obtain the output image through signal processing, including image processing and data processing, of the input signal. The display apparatus 200 may perform signal processing, including at least one of demodulation, decoding and decompressing, to the input signal. In addition, methods of image processing, which the display apparatus 200 may perform, may include scaling, a frame rate control (FRC), and a motion judder canceller (MJC), etc. The display apparatus 200 may then display the output image (S150).

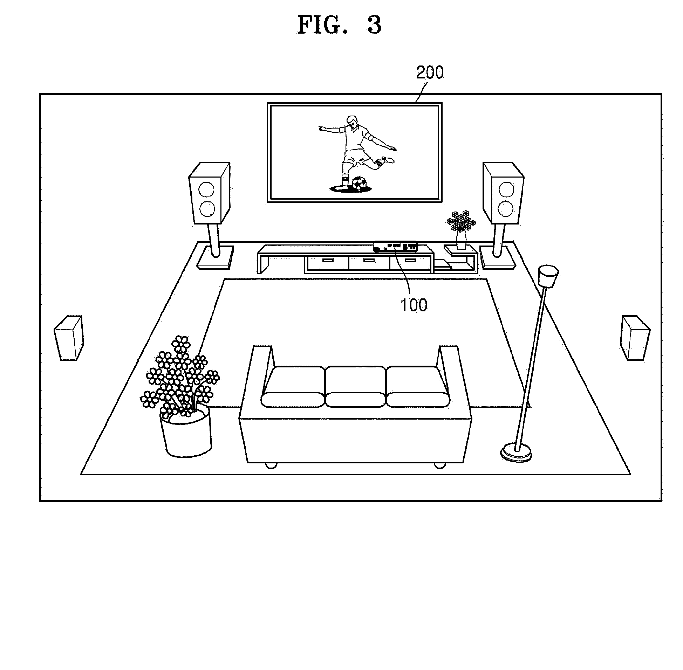

FIG. 3 illustrates a display system 1000 of FIGS. 1 and 2 according to an exemplary embodiment.

Referring to FIGS. 1 through 3, the image input apparatus 100 and the display apparatus 200 may be connected to each other wirelessly. Thus, neither a wire nor a cable may be necessary to connect the image input apparatus 100 and the display apparatus 200. Accordingly, a perfectly clean back design of the display apparatus 200 may be feasible. When the display apparatus 200 has a wall-mounted type as in FIG. 3, there may be no cable between the image input apparatus 100 and the display apparatus 200. With a wireless layout, the beauty may be enhanced and a user's satisfaction may be increased. In addition, a user may have more freedom in selecting the location of the image input apparatus 100. This freedom also may increase a user's satisfaction.

If the image input apparatus 100 is not used connecting ports capable of being connected with the external devices 10 may be realized in the display apparatus 200. In addition, when the image input apparatus 100 is used and connected with the display apparatus 200 by wire, a cable may be needed in the display apparatus 200 to connect to the image input apparatus 100. If the display apparatus 200 is wall-mounted as shown in FIG. 3, a cable connected to the display apparatus 200 may be visible.

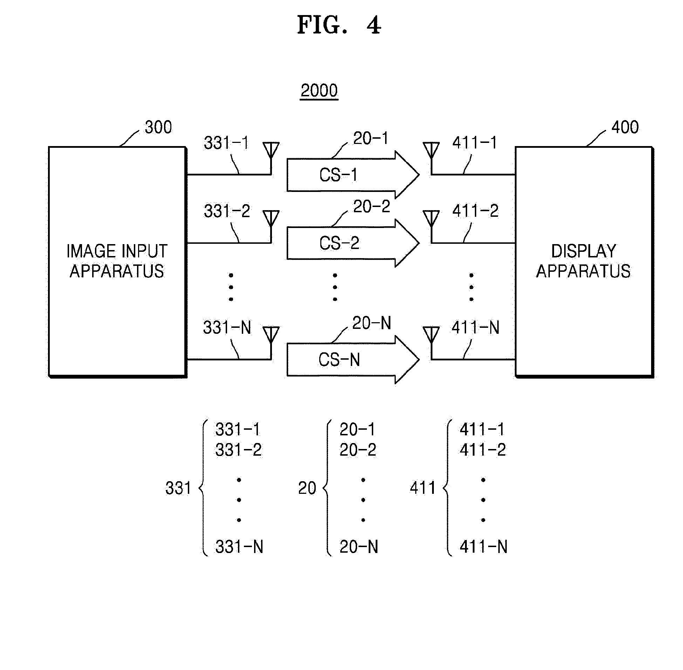

FIG. 4 illustrates a configuration of a display system 2000 according to an exemplary embodiment. The display system 2000 in FIG. 4 provides another exemplary embodiment of a display system 1000 of FIG. 1. Accordingly, some details described above for the display system 1000 may be applicable to a display system 2000 of FIG. 4.

Referring to FIG. 4, the display system 2000 may include an image input apparatus 300 and a display apparatus 400.

The image input apparatus 300 may include a plurality of antennas 331, for example, a first antenna 331-1 through an Nth antenna 331-N. The display apparatus 400 also may include a plurality of antennas 411, for example, a first antenna 411-1 through an Nth antenna 411-N.

A plurality of channels 20, which are spatially separated, for example, a first channel 20-1 through an Nth channel 20-N may be formed between the image input apparatus 300 and the display apparatus 400, due to a plurality of antennas 331 and 411. Respective channels 20 may indicate a signal path through which a signal transmitted from the image input apparatus 300 may be received by the display apparatus 400. The n^{th} channel 20-n may be formed between the n^{th} antenna 331-n of the image input apparatus 300 and the n^{th} antenna 411-n of the display apparatus 400, in which n = 1, 2, ..., N. Respectively different radio frequency (RF) bands may be allocated to each n^{th} channel 20-n. For example, the n^{th} antenna 331-n of the image input apparatus 300 may transmit a RF signal in the n^{th} RF band. As such, respective channels 20 may be spatially separated through the antennas 331, and be separated into the frequency bands through RF bands in use.

The image input apparatus 300 may transmit respective channel signals CS-1 through CS-N through respective antennas 331. The first channel signal CS-1 may be transmitted through the first antenna 331-1 and the second channel signal CS-2 may be transmitted through the second antenna 331-2. As such, the n^{th} channel signal CS-n may be transmitted through the n^{th} antenna 331-n, in which n may be 1, 2, ..., N.

The input signal transmitted from the image input apparatus 100 to the display apparatus 200, as illustrated in FIGS. 1 and 2, may include a plurality of channel signals CS-1 through CS-N as illustrated in FIG. 4. The image input apparatus 300 of FIG. 4 may separate the input signal into a plurality of channel signals CS-1 through CS-N, to then be transmitted to the display apparatus 400. The image input apparatus 300 may transmit respective channel signals CS-1 through CS-N, through respectively corresponding antennas 331-1 through 331-N.

The display apparatus 400 may receive respective channel signals CS-1 through CS-N, through respective antennas 411-1 through 411-N. In FIG. 4, the display apparatus 400 also includes a plurality of antennas 411; however, the number of antennas of the display apparatus 400 is not limited. When the signal processing capability of the display apparatus 400 allows for it, the display apparatus 400 may receive, through only one antenna, a plurality of channel signals CS-1 through CS-N. The display apparatus 400 may separate, through signal processing, a plurality of the received channel signals into respective channels 20.

As described above, according to one or more exemplary embodiments, channel signals CS-1 through CS-N may be simultaneously transmitted through a plurality of channels 20, to increase the transmission rate. In addition, because the transmission rate may be increased, the image input apparatus 300 may decrease the compression rate for obtaining the input signal, thus reducing the loss rate of data. Accordingly, the image quality may be enhanced and a user's satisfaction also may be enhanced.

When a display apparatus 400 is large, displaying images with ultra high definition (UHD) may be helpful. This is because the output image outputted by the display apparatus 400 may include mass data. Accordingly, the image input apparatus 100 may need to transmit mass input signals to the display apparatus 200. When a plurality of channels 20 is used in one or more exemplary embodiments, the image input apparatus 300 may effectively transmit mass input signals to the display apparatus 400.

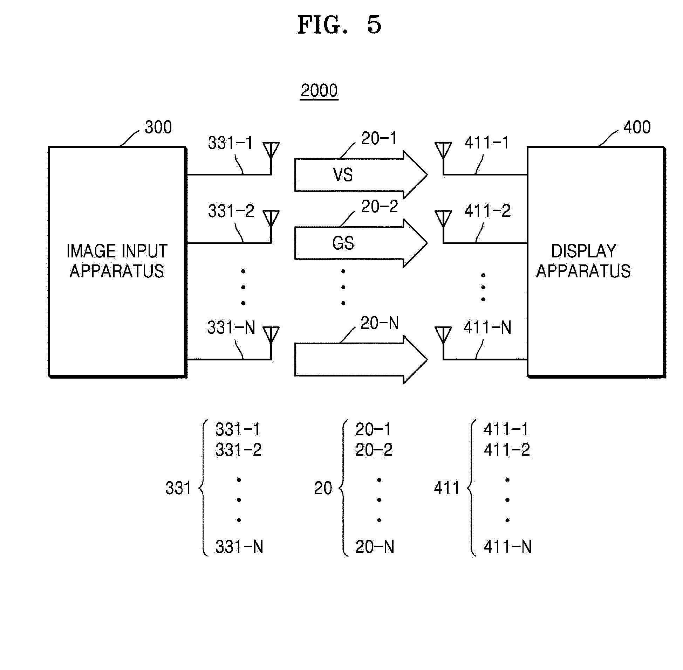

FIG. 5 illustrates an example of a display system 2000 of FIG. 4 according to an exemplary embodiment.

Referring to FIG. 5, the first channel signal, transmitted through the first antenna 331-1 by the image input apparatus 300, may include the video signal VS, and the second channel signal, transmitted through the second antenna 331-2 may include the graphic signal GS.

The display apparatus 400 may receive the video signal VS through the first antenna 411-1, and the graphic signal GS through the second antenna 411-2. The display apparatus 400 may individually perform signal processing to the video signal VS and the graphic signal GS, which are separately received.

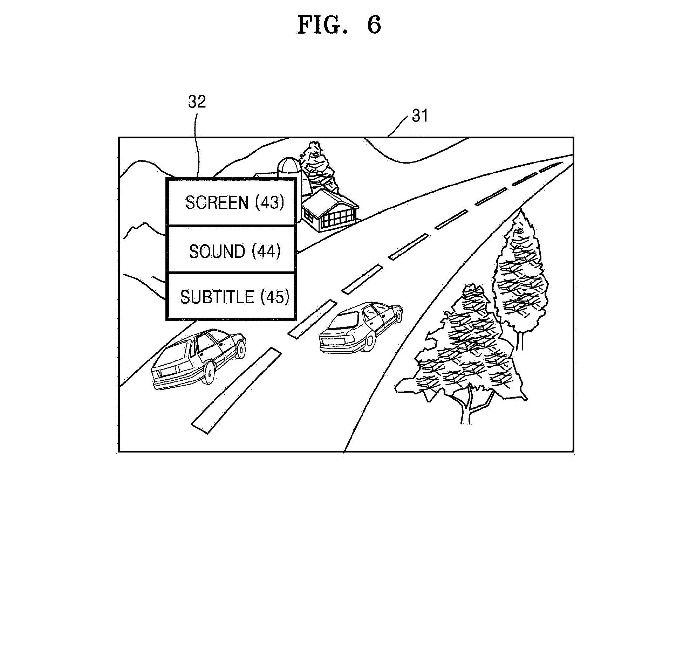

FIG. 6 illustrates an example of an image obtained by a display apparatus 400 of FIG. 5 according to an exemplary embodiment.

Referring to FIGS. 5 and 6, the image obtained by the display apparatus 400 may include a video image 31 and the graphic object 32. The display apparatus 400 may obtain the video image 31 based on the video signal VS received through the first channel 20-1, and the graphic object 32 based on the graphic signal GS received through the second channel 20-2. The display apparatus 400 may obtain an image in FIG. 6 by overlapping the video image 31 and the graphic image 32.

Also, because the video image 31 is a video image, the image may continuously change over time. For example, a car in the video image 31 may move over time between image frames.

The graphic object 32 may include a screen control menu 43, a sound control menu 44, a subtitle setup menu 45, etc. The graphic object 32 illustrated in FIG. 6 is an example only and may vary as described above. The graphic object 32 might not be changed over time, when compared with the video image 31. The graphic object 32 may be outputted by a user's selection, and the graphic object 32 may be changed while outputting a detailed menu, etc., at a user's selection.

However, an original image as illustrated in FIG. 6, which is obtained based on the video signal VS and the graphic signal GS received by the display apparatus 400, may be different from the output image to be outputted by the display apparatus 400. For example, the display apparatus 400 may obtain the output image through signal processing of the original image. At this point, the display apparatus 400 may independently perform signal processing to the video signal VS and signal processing to the graphic signal GS. In other words, when the display apparatus 400 performs signal processing on the video signal VS, the graphic signal GS might not be influenced by signal processing to the video signal VS.

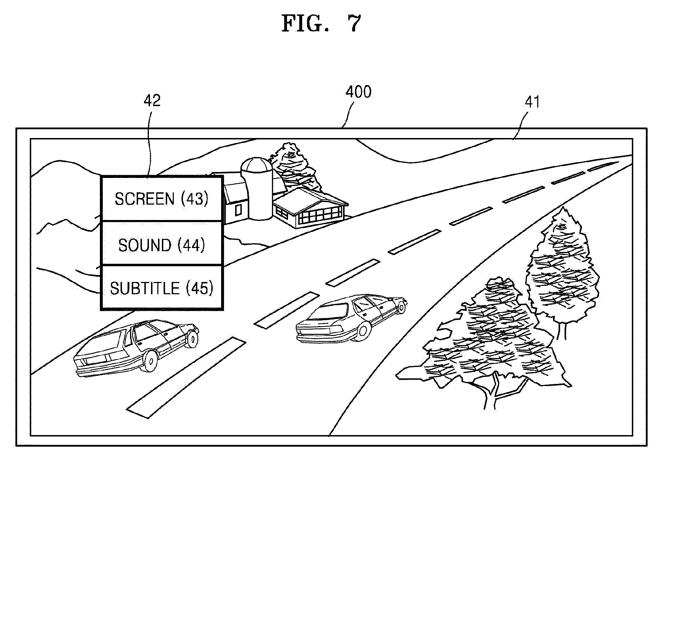

FIG. 7 illustrates an example of the output image displayed by a display apparatus 400 of FIG. 5 according to an exemplary embodiment. The output image in FIG. 7 may be obtained through image processing of the video image 31 in FIG. 6 by the display apparatus 400.

Referring to FIGS. 5 through 7, an output video image 41 and an output graphic object 42 may be displayed on the screen of the display apparatus 400.

When the video image 31 in FIG. 6 and the output video image 41 in FIG. 7 are compared, an aspect ratio of the video image 31 and that of the output video image 41 may be different. The aspect ratio is a ratio between the width and the height of an image. For example, the aspect ratio of the video image 31 may be 16:9, while that of the output video image 41 may be 21:9.

As illustrated in FIGS. 6 and 7, the aspect ratio of the video image 31 based on the video signal VS received by the display apparatus 400 may be different from that of the display apparatus 400. In this example, the display apparatus 400 may obtain the output video image 41 scaled by scaling the video signal VS.

The display apparatus 400 may independently perform signal processing to the video signal VS and the graphic signal GS, which are separately received. In other words, the display apparatus 400 may scale the video signal VS without scaling the graphic signal GS.

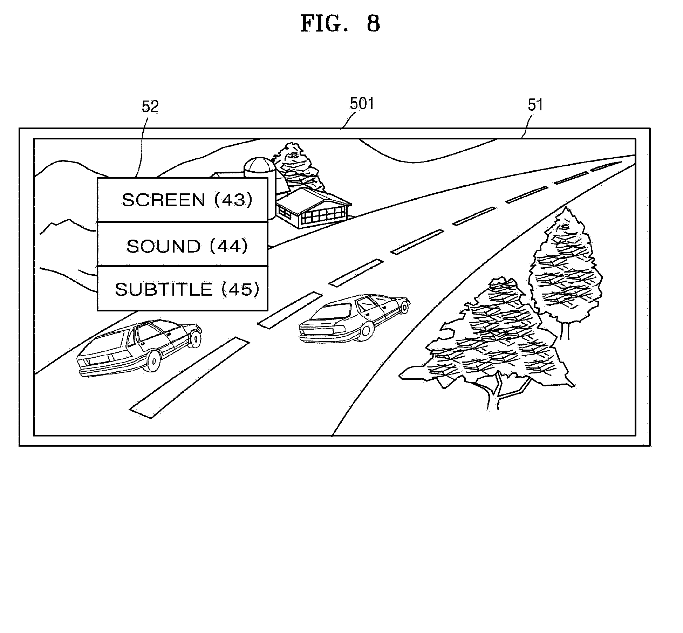

FIG. 8 illustrates an example of the output image displayed by a display apparatus 501. The display apparatus 501 in FIG. 8 illustrates an example in which the video signal VS and the graphic signal GS are not separately received.

Referring to FIG. 8, the display apparatus 501 may receive a mixed signal in which the video signal VS and the graphic signal GS are mixed. When the aspect ratio of the mixed signal may be different from that of the display apparatus 501, the display apparatus 501 may scale the mixed signal. The display apparatus 501 may obtain the output video image 51 and the output graphic object 52 based on the mixed signal through scaling.

The output graphic object 52 in FIG. 8 may have a longer width, when compared with the output graphic object 42 in FIG. 7. In addition, the output graphic object 52 in FIG. 8 may have an extended width and may hide a larger portion of the output video image 51, when compared with an example of FIG. 7. This result may be due to the fact that the graphic signal GS also may be scaled when the display apparatus 501 scales the mixed signal.

Referring to FIGS. 5 through 7 again, according to one or more exemplary embodiments, the image input apparatus 300 may transmit the video signal VS and the graphic signal GS through respectively different channels 20-1 and 20-2. Accordingly, the display apparatus 400 may scale the video signal VS only, and thus, scaling of the graphic signal GS together with the video signal VS may be prevented. In other words, when the video signal VS undergoes image processing, the graphic signal GS may not be affected. Through this separate scaling, the output graphic object 42 may be displayed with the original ratio based on the graphic signal GS.

When the aspect ratio of the video image 31 based on the video signal VS received by the display apparatus 400 is different from the aspect ratio of the display apparatus 400, the display apparatus 400 may adjust the aspect ratio through panorama stitching in addition to scaling. Panorama stitching uses image processing to obtain one image by connecting a plurality of images. Through panorama stitching, a horizontal ratio of the image may be increased. As described in one or more exemplary embodiments, the output graphic object 42 may be naturally displayed with the original ratio based on the graphic signal GS, while the display apparatus 400 may perform panorama stitching to the video signal VS only.

According to one or more exemplary embodiments, the display apparatus 400 may receive the video signal VS and the graphic signal GS through respectively different channels 20-1 and 20-2 and individually perform image processing to the video signal VS and the graphic signal GS. The display apparatus 400 may perform image processing to the video signal VS only by FRC, MJC, etc., in addition to scaling and panorama stretching described above.

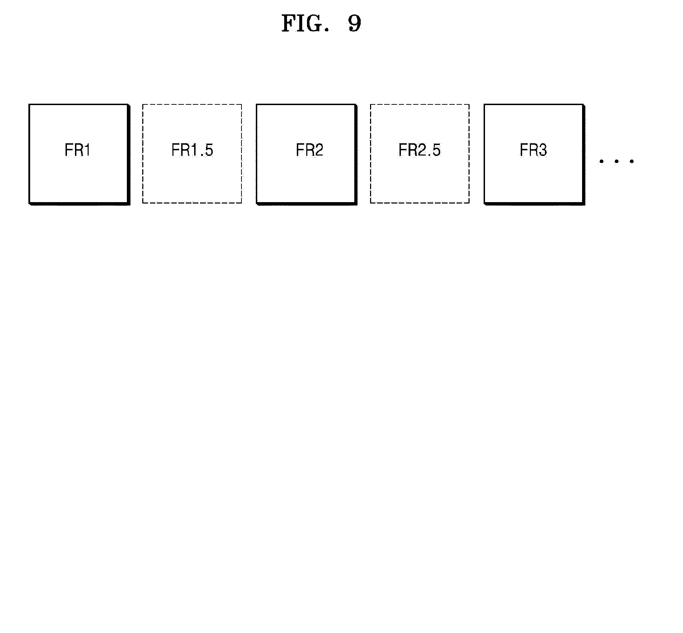

FIG. 9 illustrates an example of the frame rate control (FRC) according to an exemplary embodiment.

Referring to FIG. 9, the FRC is an image processing method to change a frame rate by obtaining interpolated frames FR1.5, FR2.5, ... among a plurality of frames FR1, FR2, FR3, .... Referring to FIGS. 5 through 9, the display apparatus 400 may obtain a plurality of frames FR1, FR2, FR3, ... based on the video signal VS received. The display apparatus 400 may obtain interpolated frames FR1.5, FR2.5, ... among frames FR1, FR2, FR3, ... through the FRC. In this interpolation, the display apparatus 400 may obtain the output video image including frames FR1, FR1.5, FR2, FR2.5, FR3, ... with a changed frame rate through the FRC. For example, when the frame rate of frames based on the video signal VS received may be 60 Hz (that is, 60 frames per second), the display apparatus 400 may obtain the output video image with the frame rate of 120 Hz (,that is, 120 frames per second) through the FRC as illustrated in FIG. 9.

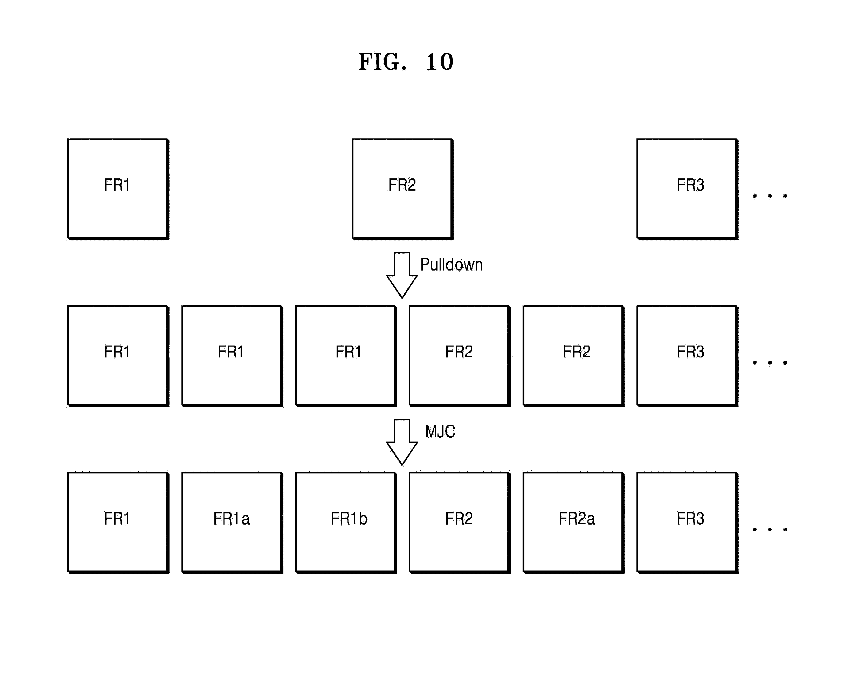

FIG. 10 illustrates an example of the motion judder canceller (MJC) according to an exemplary embodiment.

Referring to FIG. 10, when a 3:2 pulldown processing may be applied to the original frames FR1, FR2, FR3, ..., pulldowned frames FR1, FR1, FR1, FR2, FR2, FR3, ...may be obtained. When a 2:3 pulldown processing may be applied, pulldowned frames may be FR1, FR1, FR2, FR2, FR2, FR3, .... In other words, the 2:3 pulldown processing may be applied, unlike in FIG. 10. For example, when the frame rate of the original frames FR1, FR2, FR3, ... is 24 Hz, the frame rate of pulldowned frames FR1, FR1, FR1, FR2, FR2, FR3, ... may be changed to 60 Hz.

Meanwhile, the original frame ratio, FR1:FR2, in pulldowned frames FR1, FR1, FR1, FR2, FR2, FR3, ..., may not be 1:1 but it may be either 2:3 or 3:2. Therefore, when a movement difference between the original frames FR1 and FR2 happens, and human eyes see the video images in pulldowned frames, awkwardness in the movement of the video may be detected. A shaking, a stoppage of images, etc., which may happen due to the difference from the original frame ratio, FR1:FR2, is known as a motion judder.

The MJC is an image processing method to obtain corrected frames FR1, FR1a, FR1b, FR2, FR2a, FR3, ... from pulldowned frames FR1, FR1, FR1, FR2, FR2, FR3, .... A motion may be estimated based on FR1 and FR2 and accordingly, corrected frames FR1a, FR1b and FR2a may be obtained based on FR1 and FR2. The motion judder may be eliminated through the MJC.

Referring to FIGS. 5 and 10, the display apparatus 400 may obtain, based on the video signal VS received, either the original frames FR1, FR2, FR3, ... or pulldowned frames FR1, FR1, FR1, FR2, FR2, FR3, .... The display apparatus 400 may obtain corrected frames FR1, FR1a, FR1b, FR2, FR2a, FR3, ... through the MJC.

According to an exemplary embodiment, the display apparatus 400 may receive a mixed signal mixed with the video signal VS and the graphic signal GS. When the display apparatus 400 performs image processing including the FRC and the MJC to the mixed signal, a judder, a triball, and a halo may happen in a manner that the output graphic object 42 in FIG. 7, displayed on the display apparatus 400 may be shaking, broken, or shadowy around the perimeter of the graphic object 42. Thus, when the display apparatus 400 performs the FRC, the MJC, etc. to the video signal VS according to an exemplary embodiment, the output graphic object 42 in FIG. 7, may be cleanly outputted. Through this process, problems including the judder, the triball and the halo may be prevented.

As described above, according to one or more exemplary embodiments, the video signal VS and the graphic signal GS may be separately transmitted, and image processing may be performed to the video signal VS, separately from the graphic signal GS. Through this process, problems such as an afterimage may be prevented when the output video image and the graphic object are simultaneously displayed as an output image on the display apparatus 400. Accordingly, image quality of a display apparatus 400 may be improved and a user's satisfaction may be increased.

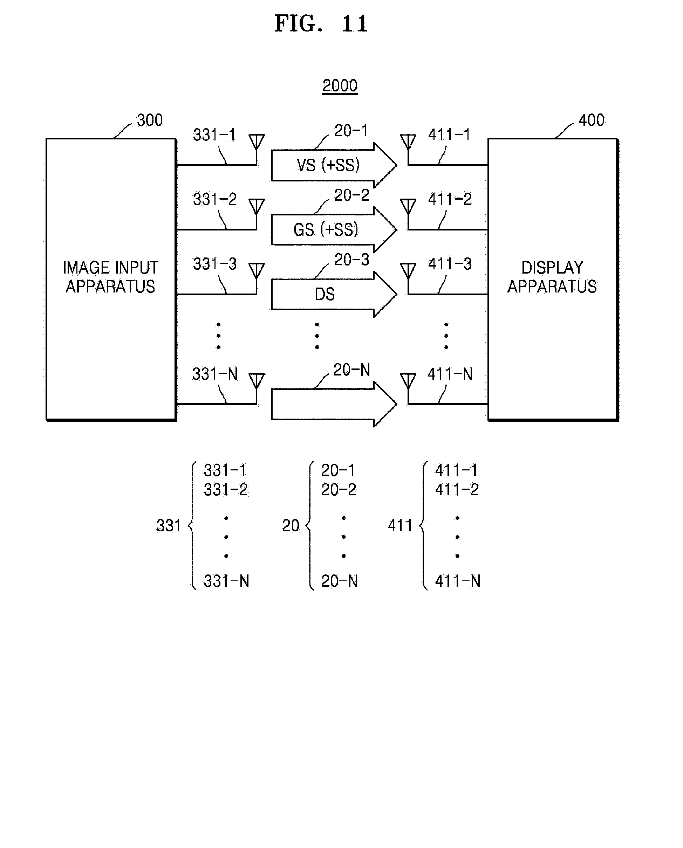

FIG. 11 illustrates another exemplary embodiment of a display system 2000 of FIG. 4. Details described above may also be applied to a display system 2000 of FIG. 11.

Referring to FIG. 11, in the image input apparatus 300, the first channel signal transmitted through the first antenna 331-1 may include the video signal VS, the second channel signal transmitted through the second antenna 331-2 may include the graphic signal GS, and the third channel signal transmitted through the third antenna 331-d may include the data signal DS. A sound signal SS may be included in the first channel signal and transmitted with the video signal VS. Also, the sound signal SS may be included in the second channel signal and transmitted with the graphic signal GS.

For example, the image input apparatus 300 may obtain the first channel signal by performing compression and high definition multimedia interface (HDMI) formatting to the video signal VS and the sound signal SS. In addition, the image input apparatus 300 may compress and HDMI format the graphic signal GS and the sound signal SS to obtain the second channel signal. The sound signal SS may be a signal in an inter-IC sound, that is, integrated interchip sound (I2S) format.

In addition, the image input apparatus 300 may obtain the third channel signal by formatting the data signal DS in at least one of USB, I2C, peripheral element interconnect express (PCIe), universal asynchronous receiver/transmitter (UART), etc. However, types of formatting to the video signal VS, the graphic signal GS, the sound signal SS, the data signal DS, etc. are not limited hereto.

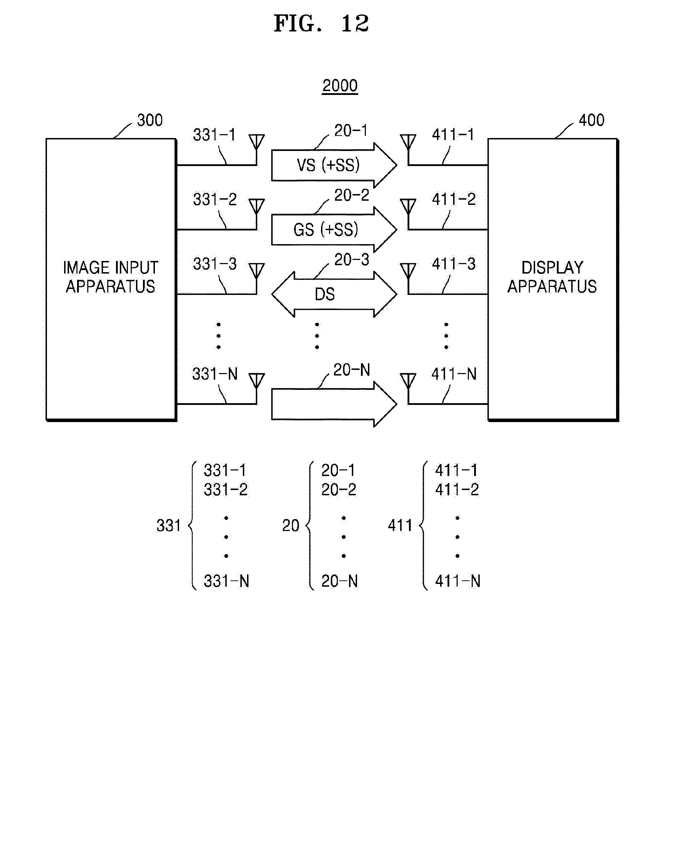

FIG. 12 illustrates another exemplary embodiment of a display system 2000 of FIG. 4. Details described above may also be applied to a display system 2000 of FIG. 12.

Referring to FIG. 12, in the image input apparatus 300, the third channel signal transmitted through the third antenna 331-3 may include the data signal DS. The image input apparatus 300 and the display apparatus 400 may perform a bidirectional communication through the third channel 20-3. The third antenna 331-3 that is at least one of the plurality of antennas 331 of the image input apparatus 300 may be a transceiving antenna, and the third antenna 411-3 that is at least one of the plurality of antennas 411 of the display apparatus 400 may also be a transceiving antenna. Thus, the image input apparatus 300 may transmit the data signal DS to the display apparatus 400 and the display apparatus 400 may transmit a control signal to the image input apparatus 300, also through the third channel 20-3. The display apparatus 400 may initialize the image input apparatus 300 or control the operation of the image input apparatus 300 by transmitting the control signal to the image input apparatus 300 through the third channel 20-3. For example, a user of the display apparatus 400 may command a particular operation to the display apparatus 400 through an input unit including a remote controller and a touch screen. The display apparatus 400 may obtain the control signal based on a user's command and transmit the control signal to the image input apparatus 300 through the third channel 20-3.

At least one of the plurality of channels 20-1 through 20-N, e.g., a third channel 20-3, formed between the image input apparatus 300 and the display apparatus 400, may be used for bidirectional communication. Through this process, both the image input apparatus 300 and the display apparatus 400 may mutually control the display system. The display apparatus 400 may perform bidirectional communication to transmit a control signal to the image input apparatus 300 through a third channel 20-3 when the image input apparatus 300 is in a stand-by mode, in which there is no transmitting of the video signal VS, and also in a transmission mode of the video signal VS. Through bidirectional transmission, each of the image input apparatus 300 and the display apparatus 400 may identify the other's status and mutually control the other's operation.

When only one channel is formed between the image input apparatus 300 and the display apparatus 400, the image input apparatus 300 may continuously need to transmit the video signal VS and the audio signal to the display apparatus 400 through the only one channel. Then, because the display apparatus 400 may have no communication path to control the image input apparatus 300 while the image input apparatus 300 continuously transmits the video signal VS and the audio signal, a problem may exist in which the display apparatus 400 may not be able to control the image input apparatus 300.

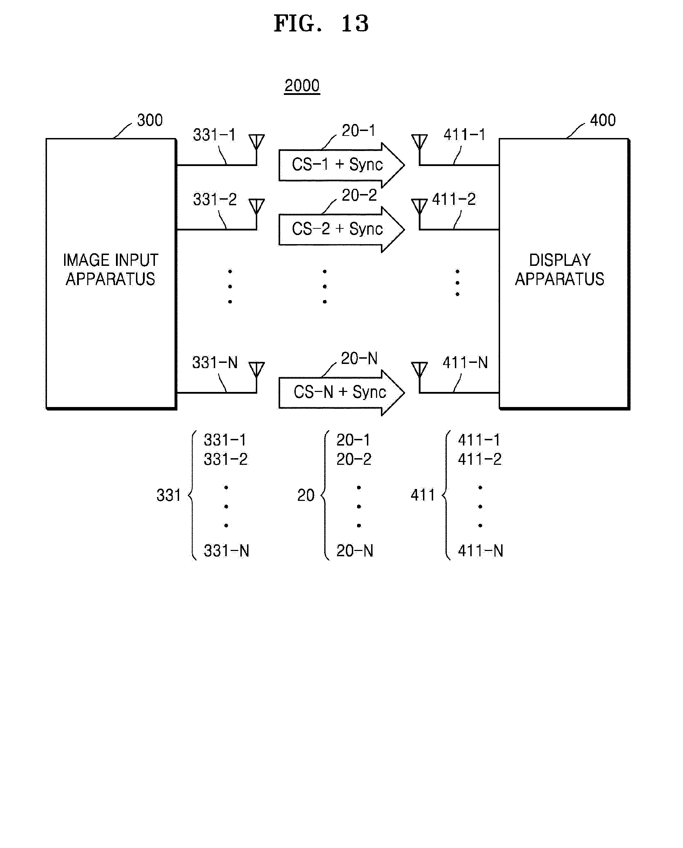

FIG. 13 illustrates another exemplary embodiment of a display system 2000 of FIG. 4.

Referring to FIG. 13, the image input apparatus 300 may transmit channel signals CS-1 through CS-N along with the sync signals through respective antennas 331. The sync signals may be identical for respective channels 20-1 through 20-N. The sync signals may be signals of which both the image input apparatus 300 and the display apparatus 400 may acknowledge and use together.

The image input apparatus 300 may obtain the sync signals, and may transmit the sync signals obtained along with respective channel signals CS-1 through CS-N. For example, the first channel signal CS-1 may include the video signal VS and the second channel signal CS-2 may include the graphic signal GS.

Respective antennas 411 of the display apparatus 400 may receive respectively corresponding signals CS-1 through CS-N along with the sync signals. The display apparatus 400 may obtain one output image based on channel signals CS-1 through CS-N which are individually and separately received. The display apparatus 400 may combine or multiplex channel signals CS-1 through CS-N.

According to an exemplary embodiment, channel signals CS-1 through CS-N received by the display apparatus 400 through respectively different channels 20-1 through 20-N may not have identical timing due to the receiving time delay among channels 20-1 through 20-N. However, the display apparatus 400 may synchronize channel signals CS-1 through CS-N based on the already known sync signals, and compensate the timing of channel signals for the receiving time delay. As such, the timing of channel signals CS-1 through CS-N may be adjusted appropriately. The display apparatus 400 may combine or multiplex synchronized channel signals CS-1 through CS-N.

Each of a plurality of antennas 331 included in the image input apparatus 300 may not always transmit channel signals CS-1 through CS-N. For example, the image input apparatus 300 may include four antennas 331-1 through 331-4, and only three of the antennas, e.g., 331-1 through 331-3, among the four antennas 331-1 through 331-4 may transmit respective channel signals. In this case, the fourth antenna 411-4 of the display apparatus 400 may not receive the channel signal or the sync signal. The display apparatus 400 may detect whether the channel signals are transmitted through channels 20-1 through 20-4, based on whether the sync signals are received or not. For example, the display apparatus 400 may detect whether the sync signals are received or not in each respective antenna 411-1 through 411-4, and determine that the channel signals are not transmitted through channels in which the sync signals are not received.

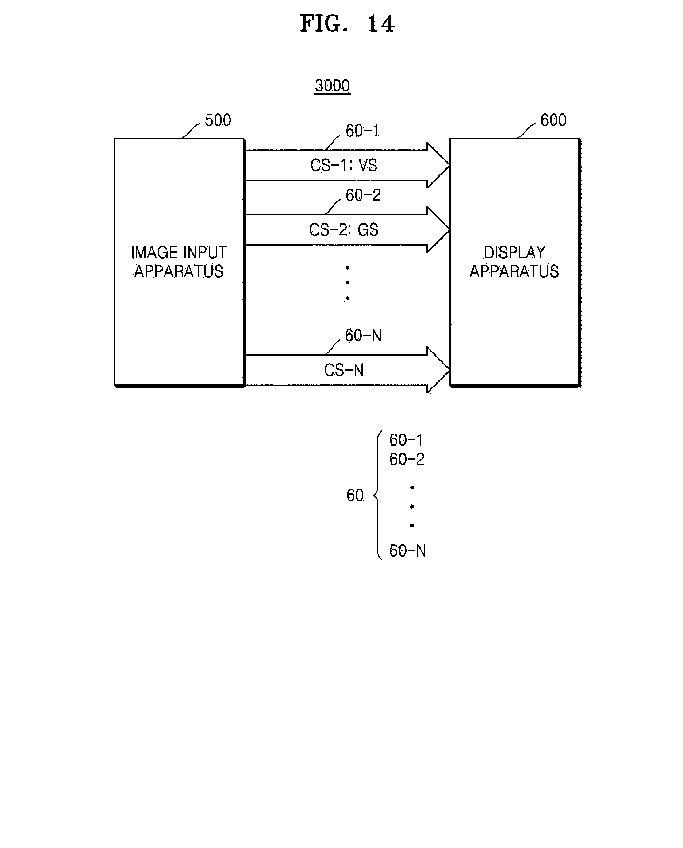

FIG. 14 illustrates a configuration of a display system according to an exemplary embodiment.

Referring to FIG. 14, the display system 3000 may include an image input apparatus 500 and a display apparatus 600. The image input apparatus 500 and the display apparatus 600 may communicate by wire or wirelessly with each other. If communication is done by wire, a plurality of wire channels 60 (60-1 through 60-N) may be formed between the image input apparatus 500 and the display apparatus 600. The image input apparatus 500 may transmit respective channel signals CS-1 through CS-N through respective wire channels 60-1 through 60-N. The first channel signal CS-1 transmitted through the first wire channel 60-1 may include the video signal VS, and the second channel signal CS-2 transmitted through the second wire channel 60-2 may include the graphic signal GS.

Respective wire channels 60 may be realized in one wire communication cable. In this case, a plurality of wire channels 60 may be realized in one integrated cable including respective wire communication cables.

Details described above for a display system may be also be applied to a display system 3000 of FIG. 14.

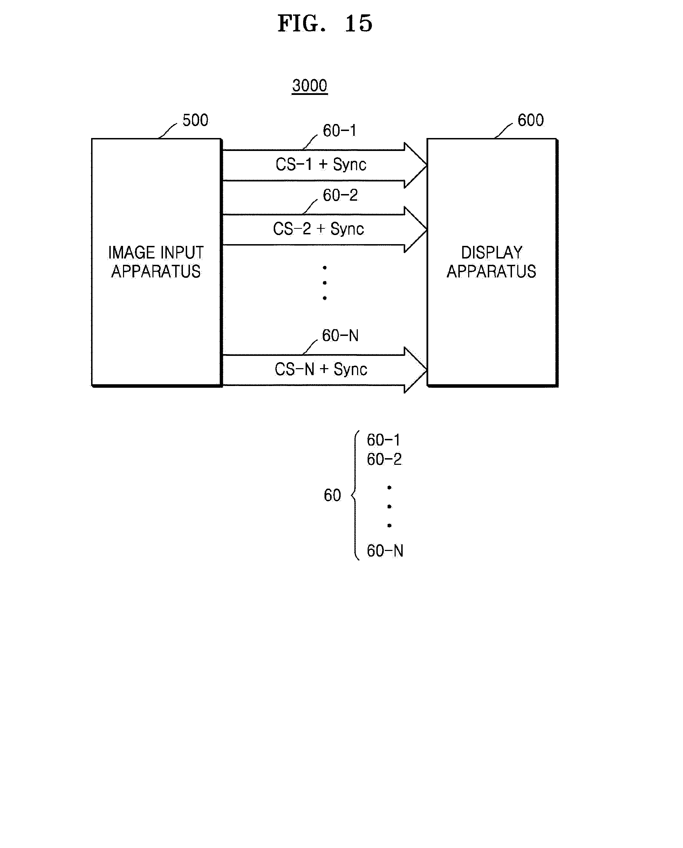

FIG. 15 illustrates an example of a display system 3000 of FIG. 14 according to an exemplary embodiment.

Referring to FIG. 15, the image input apparatus 500 may transmit respective channel signals CS-1 through CS-N through respective wire channels 60-1 through 60-N along with the sync signals. The display apparatus 600 may synchronize a plurality of channels 60 based on the sync signals. Through this, the display apparatus 600 may synchronize and multiplex received channel signals CS-1 through CS-N.

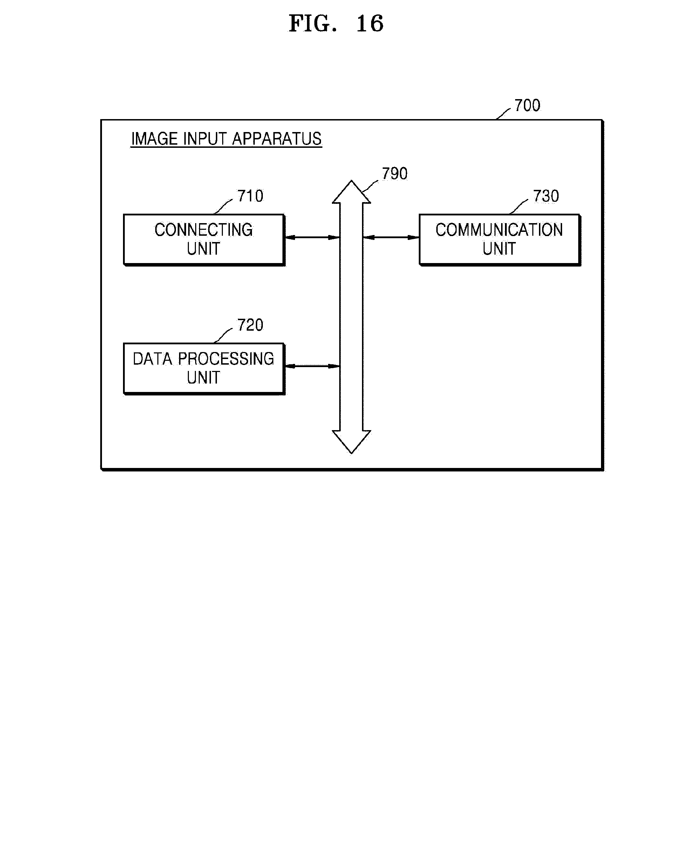

FIG. 16 illustrates a configuration of an image input apparatus 700 according to an exemplary embodiment. The image input apparatus 700 in FIG. 16 provides another exemplary embodiment of an image input apparatus 100, 300 or 500.

Referring to FIG. 16, the image input apparatus 700 may include a connecting unit 710, a data processing unit 720 (e.g., data processor) and a communication unit 730 (e.g., communicator). Various units included in the image input apparatus 700 may be connected to each other via a bus 790.

The connecting unit 710 (e.g., receiver) may be configured to be connected to a plurality of external devices 10 in FIG. 1 which may provide input sources. The connecting unit 710 may include one or more elements which may enable the image input apparatus 100 to communicate with a plurality of external devices 10. For example, the connecting unit 710 may include various types of connecting ports. In addition, the connecting unit 710 may include at least one of a wire communication module, a short-range communication module, a wireless communication module, etc., which may be connected to various external devices.

The wire communication module may indicate a module for communication using an electrical signal or an optical signal, and examples of wire communication technology may include wire communication technology using a pair cable, a coaxial cable, an optical fiber cable, etc., and wire communication technology.

The short-range communication module may indicate a module to perform a short-range communication with a device located within a predetermined distance. Examples of short-range communication technology according to one or more exemplary embodiments may include wireless local area network (LAN), Wi-Fi, Blue, Zigbee, Bluetooth, Wi-Fi Direct (WFD), ultra wideband (UWB), infrared data association (IrDA), bluetooth low energy (BLE), near field communication (NFC), etc.; however, it is not limited thereto.

The wireless communication module may transceive signals with at least one of broadcasting stations, base stations, external devices, and servers over a wireless communication network. Examples of signals may include a sound call signal, a video call signal, or various types of data signals according to transceiving text/multimedia messages.

The data processing unit 720 may control the overall operation of the image input apparatus 700, and process various data used in the operation of the image input apparatus 700. The data processing unit 720 may obtain the input signal based on the input source received from external devices. In addition, the data processing unit 720 may obtain the graphic signal, the data signal, etc., and include them to the input signal. In addition, the data processing unit 720 may obtain the input signal including a plurality of channel signals, and the sync signals to be transmitted along with respective channel signals.

As described above, the data processing unit 720 may perform various types of signal processing for obtaining signals. In addition, the data processing unit 720 may obtain the input signal based on a transmission method. For example, when the image input apparatus 700 may transmit the input signal wirelessly, the image input apparatus 700 may obtain the input signal, that is, a wireless signal through signal processing which enables the wireless transmission.

Both the control of the operation of the image input apparatus 100, 300 or 500 and data processing used in the operation, as described above, with reference to the accompanying drawings, may be performed in the data processing unit 720. The data processing unit 720 may be realized in various forms including a central processing unit (CPU), a microprocessor or a graphic processing unit (GPU).

The communication unit 730 may be configured to communicate with the display apparatus 200 in FIG. 1 wirelessly. The communication unit 730 may be configured to communicate with the display apparatus 600 in FIGS. 14 and 15 by wire also.

FIG. 16 separately illustrates the connecting unit 710 and the communication unit 730. However, because the connecting unit 710 and the communication unit 730 may have a common factor that each of them is an element for connecting with external devices or display apparatuses, both of them may be realized into integrating common portions.

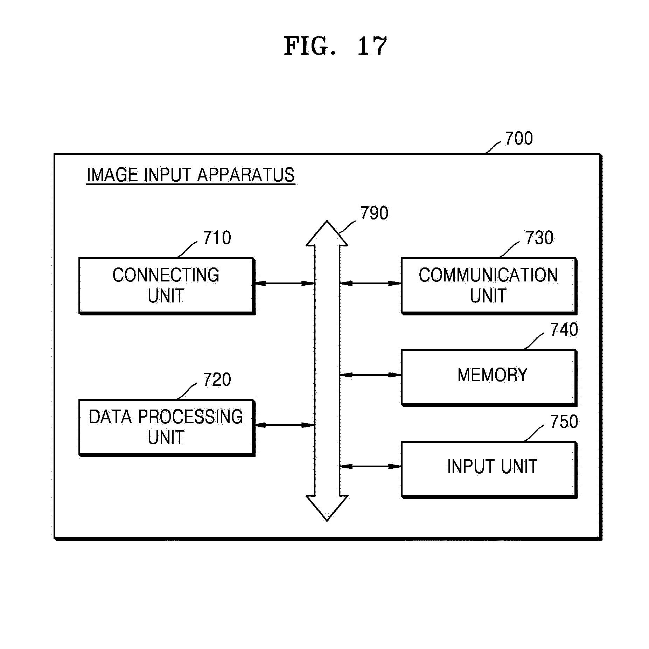

Fig. 17 illustrates another configuration of the image input apparatus 700 in FIG. 16.

Referring to FIG. 17, the image input apparatus 700 may further include a memory 740 and an input unit 750 in addition to the connecting unit 710, the data processing unit 720 and the communication unit 730.

The memory 740 may store various information or data for the operation of the image input apparatus 700. The memory 740 may store information for displaying the graphic object.

The input unit 750 may receive a user's command to control the image input apparatus 700 or the display apparatus 100 in FIG. 1. Examples of the input unit 750 may include a signal receiving unit receiving signals transmitted from a remote controller, a speech recognizer, etc. and may include other input units well known to those of ordinary skill in the art.

The data processing unit 720 may obtain the graphic signal GS based on information of the graphic object stored in the memory 740 according to a user's command through the input unit 750.

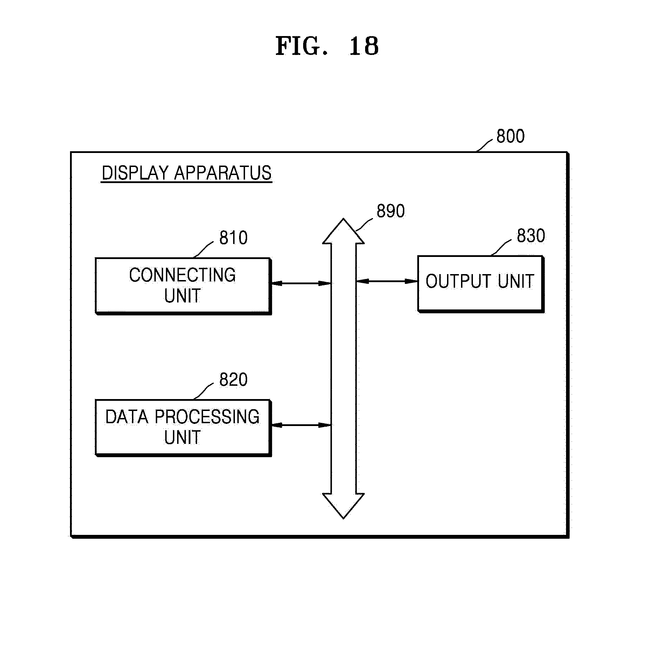

FIG. 18 illustrates a configuration of a display apparatus 800 according to an exemplary embodiment. The display apparatus 800 in FIG. 18 provides another exemplary embodiment of the display apparatus 200, 400 or 600 described above.

Referring to FIG. 18, the display apparatus 800 may include a communication unit 810, a data processing unit 820 and an output unit 830 (e.g., outputter). Various elements included in the display apparatus 800 may be connected to each other via a bus 890.

The communication unit 810 may be configured to enable wireless communication with an image input apparatus 700 of FIG. 16. The communication unit 810 may be configured to enable wire communication also with an image input apparatus 500 of FIGS. 14 and 15. The communication unit 810 may include a wire communication module, a wireless communication module, etc. for communication with an image input apparatus 700.

The data processing unit 820 may control the overall operation of the display apparatus 800 and perform data processing of various data for the operation of the display apparatus 800. The data processing unit 820 may obtain the output image through signal processing of the input signal received through the communication unit 810. In addition, the data processing unit 820 may obtain an output sound signal based on the sound signal SS included in the input signal.

Both the operation control of a display apparatus 200, 400 or 600, and the data processing, as described above, with reference to the accompanying drawings, may be performed in the data processing unit 820. The data processing unit 820 may be realized in various forms including a central processing unit (CPU), a microprocessor or a graphic processing unit (GPU).

The output unit 830 may include a display unit and a sound output unit. The sound unit may be realized as a speaker, etc. The display unit may display the output image. In addition, the sound unit may output the sound signal.

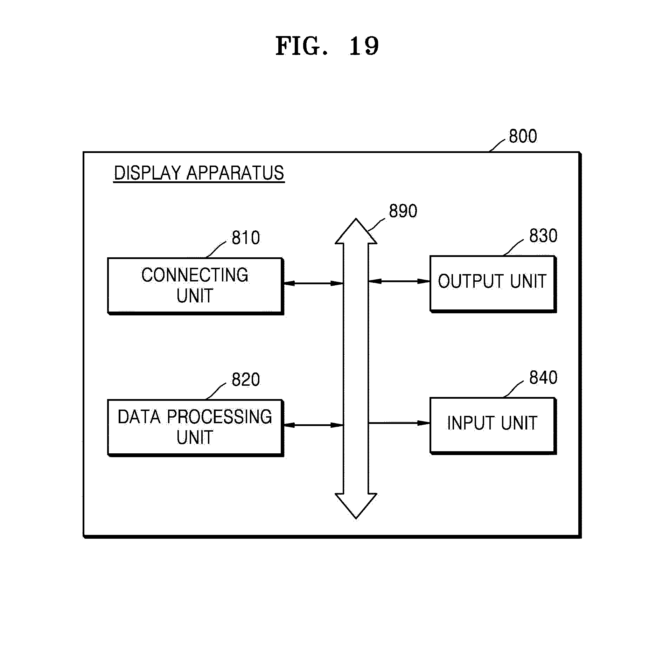

FIG. 19 illustrates another exemplary configuration of a display apparatus 800 of FIG. 18.

Referring to FIG. 19, the display apparatus 800 may further include an input unit 840 (e.g., inputter) in addition to the communication unit 810, the data processing unit 820 and the output unit 830.

The input unit 840 may receive a user's command for controlling the display apparatus 800. Examples of the input unit 800 may include a signal receiving unit receiving signals from at least one of a remote controller, a keyboard, a mouse, a touch screen, the speech recognizer, a fingerprint recognizer, an iris recognizer, etc.

The data processing unit 820 may obtain the control signal per a user's command through the input unit 840, and transmit the control signal to the image input apparatus 100 of FIG. 1. As described above, the control signal may be transmitted through a bidirectional channel which is at least one of a plurality of channels formed between the image input apparatus 100 of FIG. 1 and the display apparatus 800.

Exemplary embodiments described above may also be implemented through computer readable code/instructions in/on a medium, e.g., a computer readable medium, to control at least one processing element to implement any above described exemplary embodiment. The medium may correspond to any medium/media permitting the storage and/or transmission of the computer readable code.

The computer readable code may be recorded/transferred on a medium in a variety of ways, with examples of the medium including recording media, including magnetic storage media (e.g., ROM, floppy disks, hard disks, etc.) and optical recording media (e.g., CD-ROMs or DVDs), and carrier wave (e.g., Internet transmission) media.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image input apparatus comprising:
a receiver configured to receive, from an external device, an input source including at least one of an image source and an audio source;
a communicator configured to communicate wirelessly with a display apparatus; and
a data processor configured to obtain an input signal based on the input source and transmit the input signal to the display apparatus through the communicator.

2. The image input apparatus of claim 1, wherein the data processor is further configured to obtain a plurality of channel signals, and
wherein the communicator comprises a plurality of antennas, each of which transmits a corresponding channel signal from among the plurality of channel signals.

3. The image input apparatus of claim 2, wherein a first channel signal from among the plurality of channel signals comprises a video signal, and a second channel signal from among the plurality of channel signals comprises a graphic signal.

4. The image input apparatus of claim 3, wherein a third channel signal from among the plurality of channel signals comprises a data signal, and the data signal comprises at least one of control information for controlling the display apparatus and image processing information for signal processing of the display apparatus.

5. The image input apparatus of claim 3, wherein at least one of the first channel signal and the second channel signal further comprises an audio signal.

6. The image input apparatus of claim 2, wherein the data processor is further configured to transmit each of the plurality of channel signals along with a plurality of sync signals that are identical to each other.

7. The image input apparatus of claim 6, wherein the plurality of channel signals are transmitted simultaneously.

8. The image input apparatus of claim 6, wherein a first channel signal from among the plurality of channel signals comprises a video signal, and a second channel signal from among the plurality of channel signals comprises a graphic signal.

9. The image input apparatus of claim 3, wherein at least one antenna from among the plurality of antennas is a transceiving antenna.

10. The image input apparatus of claim 9, wherein the transceiving antenna is configured to receive a control signal transmitted from the display apparatus, and the data processor is further configured to obtain the graphic signal based on the control signal.

11. An operation method of an image input apparatus, the method comprising:
receiving an input source comprising at least one of an image source and an audio source from an external device;
obtaining an input signal based on the input source; and
transmitting the input signal to a display apparatus wirelessly.

12. The operation method of claim 11, wherein the input signal comprises a plurality of channel signals, and a first channel signal from among the plurality of channel signals comprises a video signal, and a second channel signal from among the plurality of channel signals comprises a graphic signal.

13. The operation method of claim 11, wherein the input signal comprises a plurality of channel signals, and the plurality of channel signals are transmitted through a plurality of antennas respectively.

14. The operation method of claim 13, wherein each of the plurality of channel signals is transmitted along with a plurality of sync signals that are identical to each other.

15. A non-transitory computer-readable recording medium for storing a program comprising instructions, which, when executed by a computer, performs the operation method of any of claims 11-14.
